# EUROPÄISCHE PATENTSCHRIFT

(11) **EP 1 361 155 B1**
(45) Veröffentlichungstag und Bekanntmachung des Hinweises auf die Patenterteilung: **25.08.2004**
(21) Anmeldenummer: 02010556.5
(22) Anmeldetag: 10.05.2002
(51) Int. Cl.: B64D 11/00, B60Q 3/02

(54) **Bedien- und/oder Anzeigeeinheit für Fahrzeuge**
Operating and/or display unit for vehicles
Unité de commande et/ou de visualisation pour véhicules

(43) Veröffentlichungstag der Anmeldung: 12.11.2003
(73) Patentinhaber: Goodrich Hella Aerospace Lighting Systems GmbH, 59557 Lippstadt (DE)
(72) Erfinder: Finke, Christian, 33647 Bielefeld (DE); Brölemann, Rolf, 33154 Salzkotten (DE)
(74) Vertreter: Hilleringmann, Jochen, Dipl.-Ing.

(56) Entgegenhaltungen:
- US-A- 3 330 506
- US-A- 5 347 434
- US-A- 5 707 028

## Beschreibung

Die Erfindung betrifft eine Bedien- und/oder Anzeigeeinheit für den Einbau in Fahrzeugen oberhalb der Sitzplätze in Flugzeugen.

In Fahrzeugen und insbesondere in Reisebussen und Flugzeugen befinden sich oberhalb der Sitzplätze diverse Bedien- und/oder Anzeigeelemente für beispielsweise die Belüftung, die Beleuchtung und das Rufen von Flugzeugbegleitern. Diese Bedien- und/oder Anzeigeeinheiten weisen im Regelfall ein Deckenelement auf, dessen Vorderseite der Fahrzeugkabine zugewandt ist. In dem Deckenelement befinden sich diverse Bedienelemente und/oder diverse optische Anzeigeelemente, während sich an der Rückseite des Deckenelements zumeist eine Leiterplatine mit auf dieser angeordneten elektrischen und/oder elektronischen Bauelementen befindet. Ein derartige Bedien- und/oder Anzeigeeinheit ist beispielsweise aus US 3 330 506 bekannt.

Bedien- und/oder Anzeigeeinheiten der vorstehend genannten Art werden in Flugzeugen auch als sogenannte Passenger Service Units (PSU) bezeichnet. Oberhalb dieser Einheiten befindet sich ein Freiraum, der zur Flugzeugkabinenaußenseite hin an die Außenhaut des Flugzeuges thermisch angekoppelt ist. Somit kann es in dem Zwischen- bzw. Freiraum zur Kondensatbildung kommen, da die Flugzeugaußenhaut während des Fluges extrem niedrigen Temperaturen ausgesetzt ist, was zum Kondensieren der Luft und damit zur Tropfwasserbildung führt. Damit dieses Tropfwasser die an der Rückseite des Deckenelements angeordnete Elektronik nicht beeinträchtigt, ist die Leiterplatine von einer Abdeckhaube (auch Tropfwasserdach genannt) abgedeckt. Durch eine Öffnung in der Abdeckhaube hindurch erstreckt sich ein elektrisches Kabel, das mit einer Sammelleitung elektrisch verbunden ist. Das Kabel ist mittels eines Steckers elektrisch mit der Leiterplatine verbunden.

Während der Montage bzw. Wartung eines Flugzeuges kann es immer wieder zu ungewollten Ablösungen der Kabelstecker von den Gegenstücken der Platinen kommen. Dies verlängert die Montage und Wartungszeiten und beeinträchtigt darüber hinaus die Funktion der PSU.

Eine Aufgabe der Erfindung ist es, eine Bedien- und/oder Anzeigeeinheit für den Einbau in Fahrzeugen oberhalb der Sitzplätze zu schaffen, bei denen die Kabelführung verbessert ist.

Zur Lösung dieser Aufgabe wird mit der Erfindung eine Bedien- und/oder Anzeigeeinheit für den Einbau in Fahrzeugen oberhalb der Sitzplätze und insbesondere für den Einbau in Flugzeugen vorgeschlagen, die versehen ist
- mit einem Deckenelement, das eine Vorder- sowie eine Rückseite aufweist,
- Bedienelementen und/oder optischen Anzeigeelementen, die an dem Deckenelement angeordnet sind,
- mindestens einem an der Rückseite des Deckenelements angeordneten elektrischen und/oder elektronischen Bauelemente (z.B. Leiterplatine mit Bedachung) und
- einer an der Rückseite des Deckenelements anbringbaren, das Bauelement überdeckenden Abdeckhaube, wobei die Abdeckhaube (insbesondere an mindestens einer ihrer Außenseiten von dieser) abstehende Hakenelemente zum klemmenden Halten eines elektrischen Kabels und eine Kabeldurchführungsöffnung aufweist,
- wobei die Hakenelemente nebeneinander angeordnet sind und mehrere Hakenelemente zueinander in entgegengesetzte Richtungen weisen und
- wobei zwei benachbarte sowie in entgegengesetzte Richtungen weisende Hakenelemente zur Erzielung einer wellenförmigen Kabelführung versetzt zueinander angeordnet sind.

Nach der Erfindung ist also vorgesehen, dass das Kabel in den Hakenelementen an der Außenseite der Abdeckhaube geführt ist. Die Hakenelemente sind dabei nebeneinander angeordnet und weisen in zueinander entgegengesetzte Richtungen. Jeweils zwei benachbarte Hakenelemente sind dabei in entgegengesetzten Richtungen offen und derart gegeneinander versetzt, dass eine Versetze aufweisende wellenförmige Kabelführung gegeben ist.

Diese wellenförmige Kabelführung sorgt für eine Zugentlastung des Kabels an der Abdeckhaube. Damit ist der Stecker am Kabel gegen Zugbelastungen gesichert und kann sich von dem Gegensteckerteil durch auf das Kabel einwirkende Zugkräfte nicht mehr versehentlich ablösen. Außerdem sorgt die Kabelführung an der Abdeckhaube dafür, dass sich bei der Montage bzw. Wartung des Flugzeuges keinerlei Gegenstände versehentlich mit den Kabeln verhaken können.

Um für die Bedien- und/oder Anzeigeeinheiten für die linken und rechten Sitzplatzreihen eines Fahrzeuges die gleichen Abdeckhauben verwenden zu können, ist es zweckmäßig, wenn beidseitig der Kabeldurchführungsöffnung der Abdeckhaube diese mit Hakenelementen versehen ist. Diesbezüglich ist es insbesondere von Vorteil, wenn die Konstruktion der Abdeckhaube bezüglich der Hakenanordnung und Kabelführung sowie Kabelführungsöffnung symmetrisch ist. Beispielsweise befindet sich die Kabeldurchführungsöffnung in der Mitte einer Außenseite der Abdeckhaube. In diesem Fall befinden sich beidseitig der Kabeldurchführungsöffnung jeweils symmetrisch zueinander angeordnete Hakenelemente.

Die Erfindung wird nachfolgend anhand eines Ausführungsbeispiels unter Bezugnahme auf die Zeichnung näher erläutert. Im einzelnen zeigen dabei:
- Fig. 1: ausschnittsweise eine Darstellung eines Teils einer Flugzeugkabine mit Sitzreihe und oberhalb dieser angeordneter Passenger Service Unit (PSU), und
- Fig. 2: eine perspektivische Darstellung der bei der PSU gemäß Fig. 1 verwendeten Abdeckhaube (Tropfwasserdach).

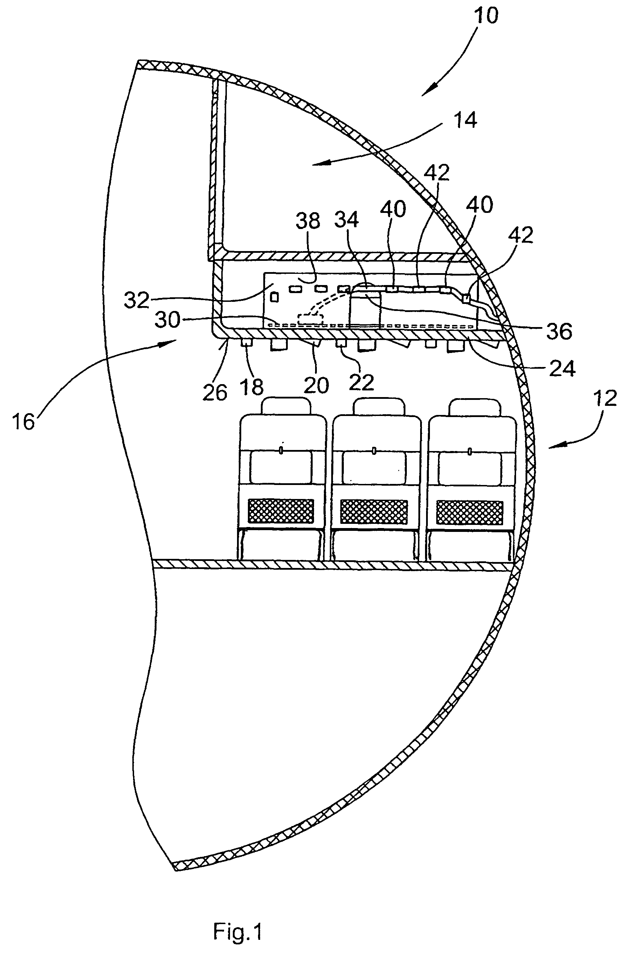

Fig. 1 zeigt ausschnittsweise eine Darstellung einer Flugzeugkabine 10. In Fig. 1 ist eine Sitzreihe 12 zu erkennen, oberhalb derer Ablagefächer 14 positioniert sind. Unterhalb der Ablagefächer 14 und damit über der Sitzreihe 12 befindet sich eine Bedien- und/oder Anzeigeeinheit 16 (PSU). Diese Einheit 16 ist unter anderem mit Bedienelementen 18 für beispielsweise die Frischluftzufuhreinstellung sowie Lampen 20 und Tastern 22 zum Rufen des Flugbegleitpersonals versehen. Diese Elemente sind in einem Deckenelement 24 integriert, deren Vorderseite 26 nach unten weist.

An der Rückseite 28 des Deckenelements 24 befindet sich eine Leiterplatine 30, die mit elektrischen bzw. elektronischen Bauelementen bestückt ist. Abgedeckt ist die Rückseite 28 im Bereich der Leiterplatine durch eine Abdeckhaube 32, die auch als Tropfwasserdach bezeichnet wird. Das für die elektrische Verbindung der Leiterplatine 30 benötigte Kabel 34 ist durch eine Öffnung 36 in einer der Seitenwände 38 der Abdeckhaube 32 hindurchgeführt. An der Außenseite 38 ist die Kabeldurchführungsöffnung 36 dann in erste und zweite Hakenelemente 40,42 eingehakt.

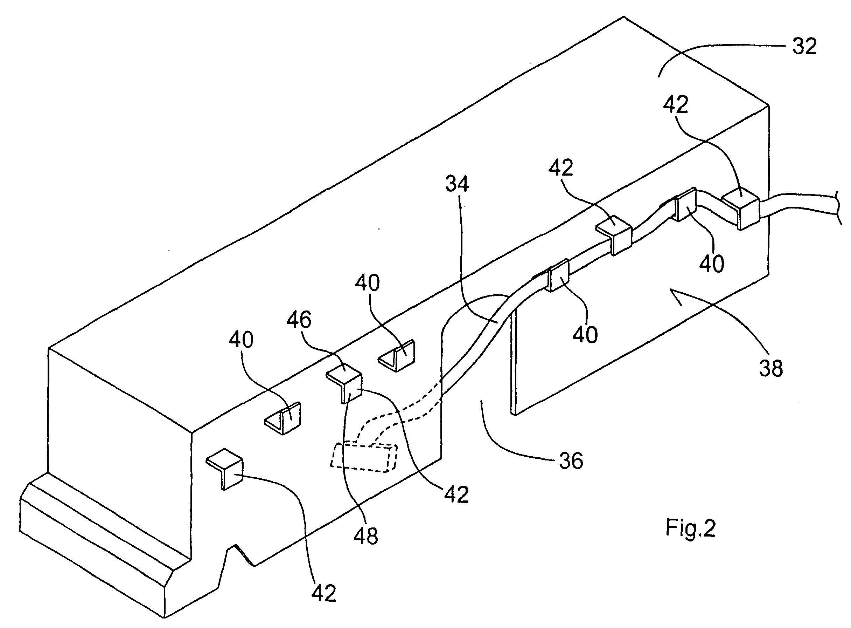

Eine vergrößerte Darstellung der Abdeckhaube 32 ist perspektivisch in Fig. 2 gezeigt. Zu erkennen ist, dass das Kabel 34 durch die mittig auf der Außenseite 38 angeordnete Kabeldurchführungsöffnung 36 verläuft. Während die ersten Hakenelemente 40 nach oben offen sind, sind die zweiten Hakenelemente 42 nach unten geöffnet. Jeweils zwei benachbarte Hakenelemente 40,42 sind höhenversetzt gegeneinander angeordnet, so dass sich insgesamt eine der Zugentlastung dienende wellenförmige Kabelführung ergibt. Beidseitig der Kabeldurchführungsöffnung 36 sind jeweils zwei Paare von ersten und zweiten Hakenelementen 40,42 symmetrisch angeordnet. Damit kann die Abdeckhaube 32 sowohl für die linke als auch für die rechte Sitzplatzreihe des Flugzeuges eingesetzt werden, wobei in dem einen Fall das Kabel 34 ausgehend von der Kabeldurchführungsöffnung 36 zur einen und in dem anderen Fall zur anderen Seite verläuft.

Wie in den Figuren zu erkennen ist, sind die Hakenelemente 40,42 als von der Außenseite 38 abstehende rechtwinklige Vorsprünge ausgebildet, die einen von der Außenseite 38 im Wesentlichen rechtwinklig abstehenden ersten Schenkel 46 und einen zu diesem im Wesentlichen rechtwinklig und damit zur Außenseite der Seitenwand 38 im Wesentlichen parallel verlaufenden zweiten Schenkel 48 aufweisen. Die Hakenelemente 40,42 halten das Kabel 34 klemmend.

Durch die wellenförmige Kabelführung ist dieses einerseits zugentlastet und verläuft ordentlich verlegt an der Außenseite 38 der Abdeckhaube 32.

## Patentansprüche

1. Bedien- und/oder Anzeigeeinheit für den Einbau in Fahrzeugen oberhalb der Sitzplätze, insbesondere in Flugzeugen, mit
- einem Deckenelement (24), das eine Vorder- sowie eine Rückseite (26,28) aufweist,
- Bedienelementen (18,22) und/oder optischen Anzeigeelementen, die an dem Deckenelement (24) angeordnet sind,
- mindestens einem an der Rückseite (28) des Deckenelements (24) angeordneten elektrischen und/oder elektronischen Bauelement und
- einer an der Rückseite (28) des Deckenelements (24) anbringbaren, das Bauelement überdeckenden Abdeckhaube (32),
- wobei die Abdeckhaube (32) abstehende Hakenelemente (40,42) zum klemmenden Halten eines elektrischen Kabels (34) und eine Kabeldurchführungsöffnung (36) aufweist,
- wobei die Hakenelemente (40,42) nebeneinander angeordnet sind, und mehrere Hakenelemente (40,42) zueinander in entgegengesetzten Richtungen weisen, und
- wobei zwei benachbarte sowie in entgegengesetzten Richtungen weisende Hakenelemente (40,42) zur Erzielung einer wellenförmigen Kabelführung versetzt zueinander angeordnet sind.

2. Bedien- und/oder Anzeigeeinheit nach Anspruch 1, **dadurch gekennzeichnet, dass** an der Abdeckhaube (32) beidseitig der Kabeldurchführungsöffnung (36) Hakenelemente (40,42) angeordnet sind.

3. Bedien- und/oder Anzeigeeinheit nach Anspruch 1 oder 2, **dadurch gekennzeichnet, dass** die Kabeldurchführungsöffnung (36) und die Hakenelemente (40,42) symmetrisch zu einer entlang einer Seitenwand (38) der Abdeckhaube (32) verlaufenden Symmetrielinie angeordnet sind.

## Claims

1. Operating and/or display unit for installation above the seats in vehicles, and in particular in aircraft, the unit comprising:
- a ceiling-mounted element (24) having a front and a rear side (26, 28),
- operating elements (18,22) and/or optical display elements arranged on the ceiling-mounted element (24),
- at least one electric and/or electronic component arranged on the rear side (28) of the ceiling-mounted element (24), and
- a covering hood (32) adapted to be attached to the rear side (28) of the ceiling-mounted element (24) and to cover the component,
- wherein the covering hood (32) comprises projecting hook elements (40,42) for clampingly holding an electric cable (34), and a cable passage (36),
- wherein the hook elements (40,42) are arranged side by side, and a plurality of hook elements (40,42) face in opposite directions relative to each other, and
- wherein two adjacent hook elements (40,42) facing in opposite directions are arranged in mutual offset relationship for obtaining an undulating cable routing.

2. Operating and/or display element according to claim 1, **characterized in that** on the covering hood (32) on both sides of the cable passage (36) hook elements (40,42) are arranged.

3. Operating and/or display unit according to claim 1 or 2, **characterized in that** the cable passage (36) and the hook elements (40,42) are arranged symmetrically to a symmetry line extending along a side wall (38) of the covering hood (32).

## Revendications

1. Unité de commande et/ou de visualisation en vue de l'encastrement dans des véhicules au-dessus des sièges, en particulier dans des aéronefs, équipée
d'un élément de plafond (24) présentant un côté antérieur ainsi qu'un côté postérieur (26,28),
d'éléments de commande (18,22) et/ou d'éléments de visualisation optiques, disposés sur l'élément de plafond (24),
d'au moins un composant électrique et/ou électronique disposé sur le côté postérieur (28) de l'élément de plafond et
d'un capot (32) pouvant être placé sur le côté postérieur (28) de l'élément de plafond (24), recouvrant le composant,
le capot (32) présentant des éléments de crochet (40,42) s'en éloignant en vue du maintien par accrochage d'un câble électrique (34) et une ouverture de passage de câble (36),
les éléments de crochet (40,42) étant juxtaposés, et plusieurs éléments de crochet (40,42) étant tournés dans des directions mutuellement opposées, et
deux éléments de crochet (40,42) adjacents et tournés dans des directions opposées étant disposés mutuellement décalés en vue de l'obtention d'un guidage de câble ondulé.

2. Unité de commande et/ou de visualisation selon la revendication 1, **caractérisée en ce que** sur le capot (32) des deux côtés de l'ouverture de passage (36) sont disposés des éléments de crochet (40,42).

3. Unité de commande et/ou de visualisation selon la revendication 1 ou 2, **caractérisée en ce que** l'ouverture de passage de câble (36) et les éléments de crochet (40,42) sont disposés symétriquement par rapport à une droite de symétrie s'étendant le long d'une paroi latérale (38) du capot (32).
